# EUROPEAN PATENT APPLICATION

(11) **EP 3 402 085 A1**
(43) Date of publication of application: **14.11.2018**
(21) Application number: 17170640.1
(22) Date of filing: 11.05.2017
(51) Int. Cl.: H04B 7/00

(54) **TECHNIQUES FOR COMPENSATING TIME DELAY DIFFERENCE IN BEAMFORMED TRANSMISSION**

(71) Applicant: Intel IP Corporation, Santa Clara, CA 95054 (US)
(72) Inventor: FRIEDMAN, Avishay, 4973238 Petach Tikva, M (IL); KERNER, Michael, 40600 Tel Mond, M (IL)
(74) Representative: Lambsdorff & Lange Patentanwälte Partnerschaft mbB

(57) **Abstract**

This disclosure relates to a transmitter device, comprising: a transmit chain configured to transmit a plurality of transmissions; a synchronizer configured to synchronize the transmit chain; and a time delay filter coupled to the synchronizer, wherein the time delay filter is configured to compensate for a time delay difference of the synchronizer.

## Description

### FIELD

The disclosure relates to a transmitter device and a beamforming transmitter device with time delay filter compensating for a time delay difference resulting from synchronizing. In particular, the disclosure relates to time delay synchronization of multiple transmit chains for multiple-input multiple-output (MIMO) communication in the scenario of transmit (Tx) Beamforming for Time Division Duplexing (TDD) deployment.

### BACKGROUND

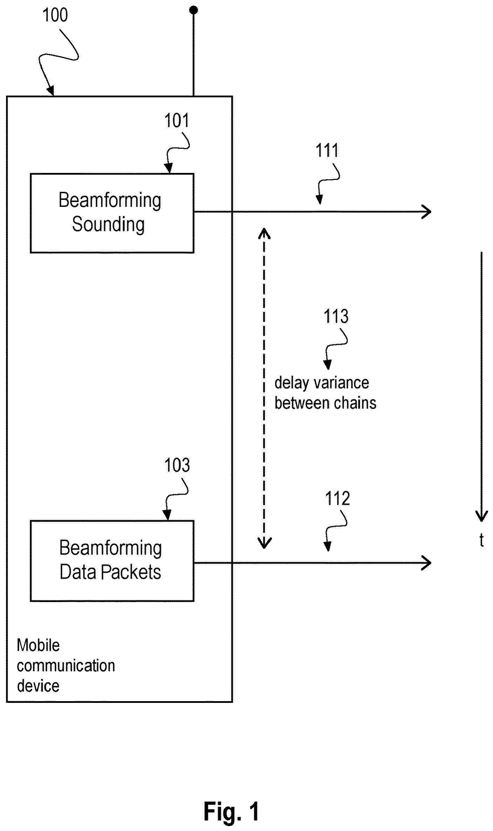

Figure 1 shows a mobile communication device 100 for MIMO communication in the scenario of Tx beamforming with a transmit chain for beamforming sounding 101 that transmits a sounding packet 111 and a transmit chain for beamforming data packets 103 that transmits data packets 112. Due to synchronization of the chains 101, 103 there occurs a delay variance 113 between the chains 101, 103, i.e. a different total delay of each chain 101, 103. This different delay degrades the beamforming performance. There is a need for a concept to improve beamforming performance in the above described scenario.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1 is a schematic diagram of a mobile communication device 100 with delay variance between transmit chains for beamforming sounding and beamforming data packets.
Fig. 2 is a schematic diagram illustrating a beamforming flow 200 between two communication devices 210, 220.
Fig. 3 is a block diagram of a WiFi transmit chain 300 operating at two clock domains 301, 302 with a synchronizer 312 in between.
Fig. 4 is a block diagram of a WiFi transmit chain 400 including synchronizer 312 and fractional delay filter 311 for compensating a time delay difference according to the disclosure.
Fig. 5 is a block diagram of a transmitter device 500 according to the disclosure.
Fig. 6 is a schematic diagram illustrating a method 600 for time delay synchronization according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:
MIMO: Multiple Input Multiple Output
BF: Beamforming
RF: Radio Frequency
LTE: Long Term Evolution
UE: User Equipment, mobile device, mobile terminal
OFDM: Orthogonal Frequency Division Multiplex eNB,
eNodeB: Base station
TDD: Time Division Duplexing
Tx: Transmit, Transmitter
Rx: Receive, Receiver
FFT: Fast Fourier Transform
GI: Guard Interval
PAPR: Peak to average power ratio
HS DAC: High-speed digital-to-analog converter
RFIC: Radio Frequency Integrated Circuit
TDC: Time-to-Digital Converter
BW: Bandwidth
MCS: Modulation and Coding Set

The methods and devices described herein may be applied in mobile communication devices, mobile terminals, mobile stations and user equipments (UEs). It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on connectivity standards, in particular high speed standards from the 802.11 family e.g. 802.11ad and successor standards. The methods are also applicable for mobile communication standards such as LTE, in particular LTE-A and/or OFDM and successor standards such as 5G. The methods and devices described below may be implemented in electronic devices, in particular electronic circuits of mobile communication devices, mobile terminals, stations and UEs. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

Methods and devices described in this disclosure may be based on beamforming, in particular Tx beamforming. Beamforming also referred to as spatial filtering is a signal processing technique used in sensor arrays and antenna arrays for directional signal transmission or reception. This is achieved by combining elements in a phased array in such a way that signals at particular angles experience constructive interference while others experience destructive interference. Beamforming can be used at both the transmitting and receiving ends in order to achieve spatial selectivity. The improvement compared with omnidirectional reception/transmission is known as the directivity of the element. The 802.11n standard defines a few methods of beamforming. One method, referred to as "explicit" beamforming, requires the downstream channel to be measured at the receiver, or beamformee, and relayed back to the transmitter, or beamformer. The beamformer uses the measured channel information to derive the transmit beamforming parameters.

Methods and devices described in this disclosure tackle the problem of time delay synchronization of multiple transmit chains (MIMO) in the scenario of Tx Beamforming for TDD deployment. Adaptive transmit beamforming is highly adopted by many standards including 802.11n, 802.11ac and 802.11ax. In methods and devices according to this disclosure transmit beamforming (TxBF) weights are applied to the transmitted signal to improve reception. The weights are adapted from knowledge of the propagation environment or channel state information (CSI). The key advantage with transmit beamforming is the ability to significantly improving link performance to a low cost, low complexity device. Tx transmit beamforming can also be used for MU-MIMO in order to increase the cell capacity. Transmit beamforming can be applied to each subcarrier in the frequency band.

Methods and devices described in this disclosure can be applied in *Time-division duplexing* (TDD) communication systems. TDD is the application of time-division multiplexing to separate outward and return signals. It emulates full duplex communication over a half-duplex communication link. Time-division duplexing has a strong advantage in the case where there is asymmetry of the uplink and downlink data rates. As the amount of uplink data increases, more communication capacity can be dynamically allocated, and as the traffic load becomes lighter, capacity can be taken away. The same applies in the downlink direction. For radio systems that are not moving quickly, another advantage is that the uplink and downlink radio paths are likely to be very similar. This means that techniques such as beamforming work well with TDD systems.

Methods and devices described in this disclosure may apply fractional delay filters and fractional delay filtering. A fractional delay filter is a digital filter which main function is to delay a processed input signal for a fractional of the sampling period time. There are two main design approaches in fractional delay filtering which are time-domain and frequency-domain design methods. In the time-domain design, the fractional delay filter coefficients are obtained by mathematical interpolation formulas, but there is a small flexibility to meet frequency-domain specifications. In contrast, frequency-domain design methods are based on frequency optimization, and a more frequency specification control is available. Frequency-domain methods have a highly efficient implementation structure, which allows online fractional value update.

Methods and devices described in this disclosure may apply time-to-digital converters (TDCs). Time-to-digital converters (TDCs), also referred to as time digitizers are devices that are used to measure a time interval and to convert it into a digital (e.g. binary) output. TDCs are used, for example, in applications, where the time interval between two signal pulses (e.g. a start pulse and a stop pulse) shall be determined. Measurement is started and stopped, when either of the rising or the falling edge of a signal pulse crosses a predetermined threshold.

The methods and devices described herein may be configured to transmit and/or receive radio signals and performing associated signal processing. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The methods and devices described hereinafter may be applied in MIMO systems, in particular multiuser MIMO systems and diversity receivers. Multiple-input multiple-output (MIMO) wireless communication systems employ multiple antennas at the transmitter and/or at the receiver to increase system capacity and to achieve better quality of service. In spatial multiplexing mode, MIMO systems may reach higher peak data rates without increasing the bandwidth of the system by transmitting multiple data streams in parallel in the same frequency band. A diversity receiver uses two or more antennas to improve the quality and reliability of a wireless link.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

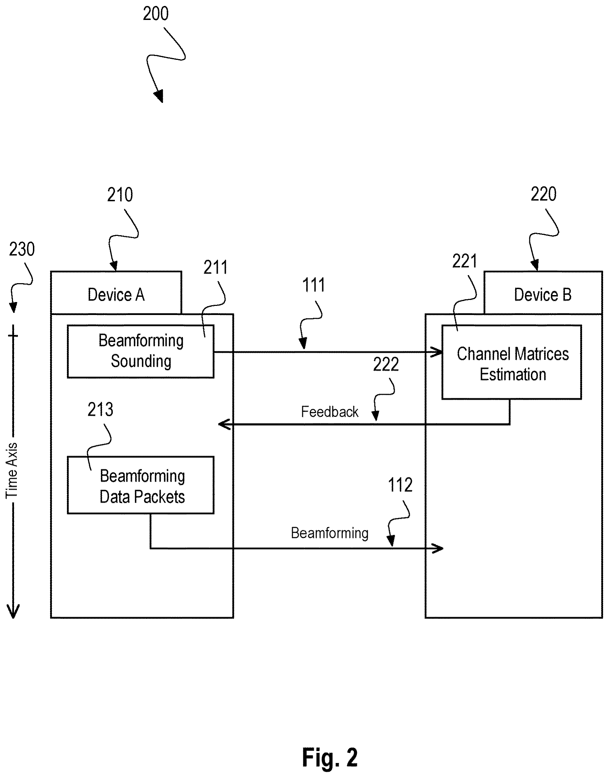

Fig. 2 is a schematic diagram illustrating a beamforming flow 200 between two communication devices 210, 220.

In order to determine the weights for Tx beamforming 213, knowledge of the CSI is required. The device 210 performing Tx BF 213 is the same device 210 that transmits the sounding packet 111. Device A, 210 sends a sounding packet 111 to device B, 220. Device B, 220 transmits the CSI or beamforming weights as feedback 222 to device A, 210. Device A, 210 uses the feedback 222 to transmit a packet 112 with Tx BF 213 to device B, 220. Ideally, the channel remains the same between the time 230 the sounding packet 111 is sent and the time 230 the beamformed packet 112 is sent.

In devices according to the disclosure as described in the following, the time delay variation between transmit chains for sending the sounding packet 111 and sending the beamformed packet 112 is compensated, i.e. the different delay inside the synchronizer (which implies different total delay of each chain) in packet A (sounding) relative to packet B (beamforming) is compensated.

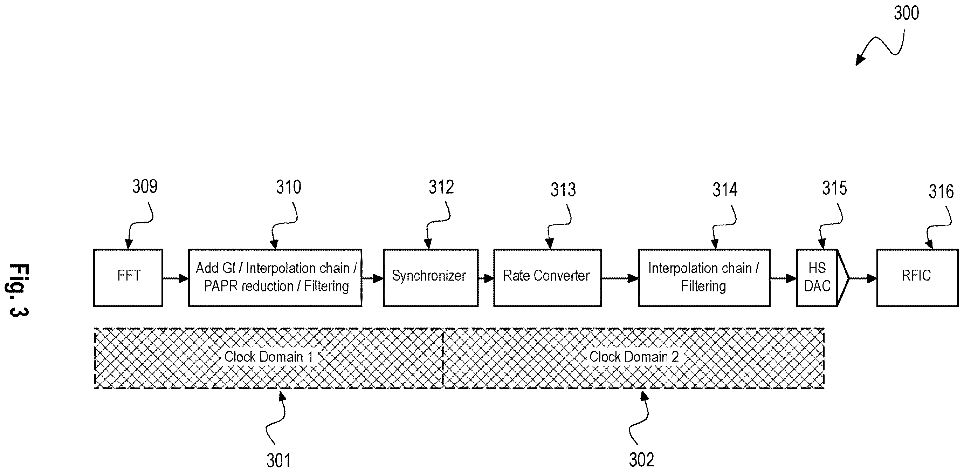

Fig. 3 is a block diagram of a WiFi transmit chain 300 operating at two clock domains 301, 302 with a synchronizer 312 in between. The transmit chain 300 includes the following blocks 309, 310, 312, 313, 314, 315, 316 described as follows. A Fast Fourier Transform (FFT) block 309 provides a transmit signal in frequency domain. A second block 310 adds a guard interval (GI) to the transmit signal, applies an interpolation chain, performs peak-to-average power reduction (PAPR) and filtering. The first two blocks 309, 310 operate at a first clock domain while the following blocks 313, 314, 315 operate at a second clock domain. A third block 312 is a synchronizer for synchronizing the WiFi transmit chain 300 between operation at the first clock domain 301 and operation at the second clock domain 302. A fourth block 313 is a rate converter to convert the rate of the transmit signal synchronized by the synchronizer 312 from a first rate to a second rate. A fifth block 314 is an interpolation chain and filtering block for interpolating and filtering the rate-converted transmit signal which is then output to a high-speed digital-to-analog converter (DAC) 315 and forwarded to a radio frequency integrated circuit (RFIC) for transmission over a radio channel.

In order to benefit from the beamforming gain, the time delay between multiple transmit chains for sounding packet 111 and data packet 112 (as described above with respect to Figures 1 and 2) should be the same. This is not happening in the WiFi Tx chain. In a WiFi device, the Tx chain 300 is active during transmit and disabled (including clocks for power save) during receive.

The WiFi transmit chain 300 includes different clock domains 301, 302 and synchronizers 312 between them. The delay of the synchronizer 312 is random up to +/-1 Tclock per activation. Since delay of every chain is random up to the uncertainty of the synchronizer 312, the delay between Tx chains is random between activations. Not constant time delay between multiple transmit chains during sounding packet 111 and data packet 112 will significantly degrade beamforming gain.

If the timing offset between different Tx chains 300 is different between sounding packet 111 and data packet 112 by 2/BW it will lead to destructive interference between high frequency tones. For example for BW=160MHz, when the timing offset is reaching 12.5ns (2/160MHz) such distractive interference will occur. In order to enjoy maximal possible gain, the time delay change should be below 1ns. This is a very tough requirement.

The concept according to the disclosure is to measure the delay of Transmit chain 300 and correct it on the fly, in order to obtain full beamforming gain of high BW signals. This approach enables to obtain full beamforming gain for high BW signals.

The delay of synchronizer can be measured during the calibration packet, i.e. the sounding packet, and the data packet and the difference can be corrected on the fly, e.g. by using a dedicated fractional delay filter.

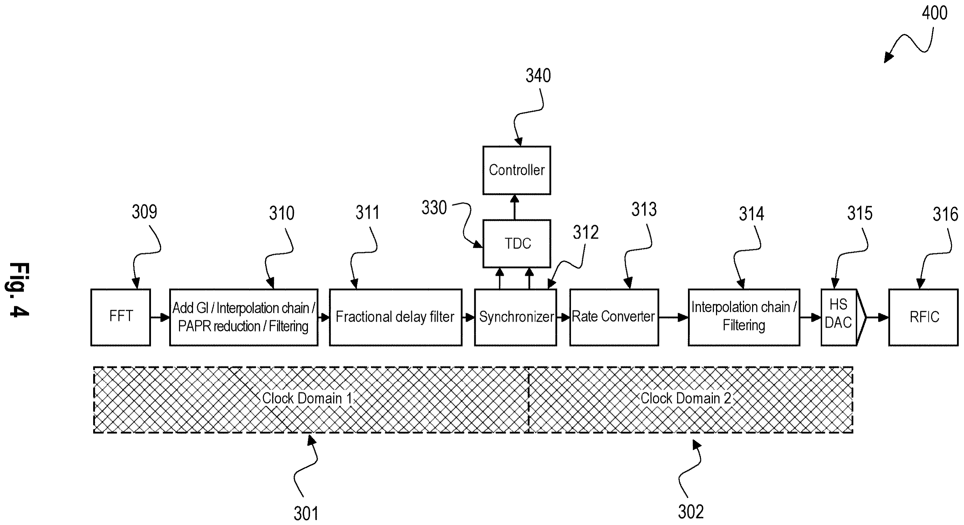

In the following example, the new flow can be described as follows: 1. Measure delay of synchronizer 312 during sounding packet 111, e.g. denoted by D1. 2. Turn on Tx chain 300 for the transmission of data packet 112. 3. Measure the delay of synchronizer 312, e.g. denoted by D2. 4. Configure a fractional delay filter, e.g. fractional delay filter 311 as depicted in Fig. 4, to compensate delay of D2-D1 (in some trivial cases it can be simple adjustment of integer delay). 5. Transmit data packet 112. Note that in this example compensation is for the random delay of synchronizer 312 per transmit chain 300. It is enough to compensate only the difference of time delay between multiple Tx chains, e.g. multiple Tx chains 300 as depicted in Fig. 3.

Fig. 4 is a block diagram of a WiFi transmit chain 400 including synchronizer 312 and fractional delay filter 311 for compensating a time delay difference according to the disclosure.

The transmit chain 400 includes the same blocks 309, 310, 312, 313, 314, 315, 316 as described above with respect to Fig. 3 for the transmit chain 300. Three additional blocks are added in the transmit chain 400. A time-to-digital converter (TDC) 330 is coupled to the synchronizer 312 for measuring the delay of the synchronizer 312. A controller 340 is coupled to the TDC 330 to calculate the difference in delay of the synchronizer 312 between sounding packet 111 and data packet 112 (D2-D1) and to configure a fractional delay filter 311 included between the block 310 (adding GI/interpolation chain/PAPR reduction/filtering) and the synchronizer 312. The fractional delay filter 311 compensates for D2-D1. In some cases the fractional delay filter 311 can be implemented by a simple adjustment of integer delay and in other cases it can be incorporated into the existing rate converter 313. The fractional delay filter 311 operates at the first clock domain 301.

The first clock domain 301 may be a digital/modem (lower) clock domain and the second clock domain 302 may be a high-speed DAC (higher) clock domain. The synchronizer syncs between these clock domains during active mode. The system can go to some power save (or sleep) mode and this is the root of the delay variance problem which is solved by the techniques according to this disclosure.

As described above with respect to Fig. 3, the concept according to the disclosure is to measure the delay of the synchronizer 312 during the calibration packet 111 and data packet 112 and to correct the difference on the fly, e.g. by using a dedicated fractional delay filter 311 as described below. The delay of the synchronizer 312 during the sounding packet 111 may be denoted as D1. Then the Tx chain 400 is turned-on for the transmission of the data packet 112. The delay of the synchronizer 312 measured by TDC 330 may be denoted as D2. Then the fractional delay filter 311 is configured by the controller 340 to compensate for the delay of D2-D1 (in some trivial cases it can be a simple adjustment of integer delay). The data packet 112 is transmitted and compensated for D2-D1 by the fractional delay filter 311. In this example the random delay of the synchronizer 312 per transmit chain 400 can be compensated. In one implementation it may be enough to compensate only the difference of time delay between multiple Tx chains. In one implementation, these blocks 311, 330, 340 may be active only in beamforming mode.

The concept described above solves a new problem that arises for example in high BW (WiFi BW = 160MHz/5G BW = 200MHz and etc..), high MCS (256QAM,1024QAM), multiple antennas Tx beamforming scenarios.

In one implementation, the input signal to the synchronizer 312 may be a write clock (which is deterministic) from the modem clock domain 301 and the read clock may come from a different clock domain 302, e.g. DAC 315 driven. In each transmission read clock may be turned on/off (for power save) and a random delay relative to the write clock may occur. This means that an unpredictable delay may occur in the synchronizer 312 which is also different between the antenna chains. The block TDC 330 is added to measure a delay between write and read clocks.

The novel concept is to measure the random delay of the synchronizer 312 at the beginning of each packet and correct it on the fly, by that eliminating the delay mismatch between Tx chains. An alternative to using a fractional delay filter 311 is to apply digital pre-distortion, e.g. by applying a linear phase shift in frequency domain in order to obtain any required time offset. However, the specific filter implemention is less important. It can be implemented in time domain and also in frequency domain. In one implemention time domain implementation can be preferred because an existing implementation of the variable rate converter can be reused.

The solution provides the highest performance results for high bandwidth signals, e.g. 160MHz and beyond. An alternative solution is to keep clocks active for the relevant blocks also during Rx, in this case the delay of the synchronizer 312 will be constant during the sounding packet 111 and the data packet 112. The drawback of this solution would be a high power consumption during Rx which is not desired.

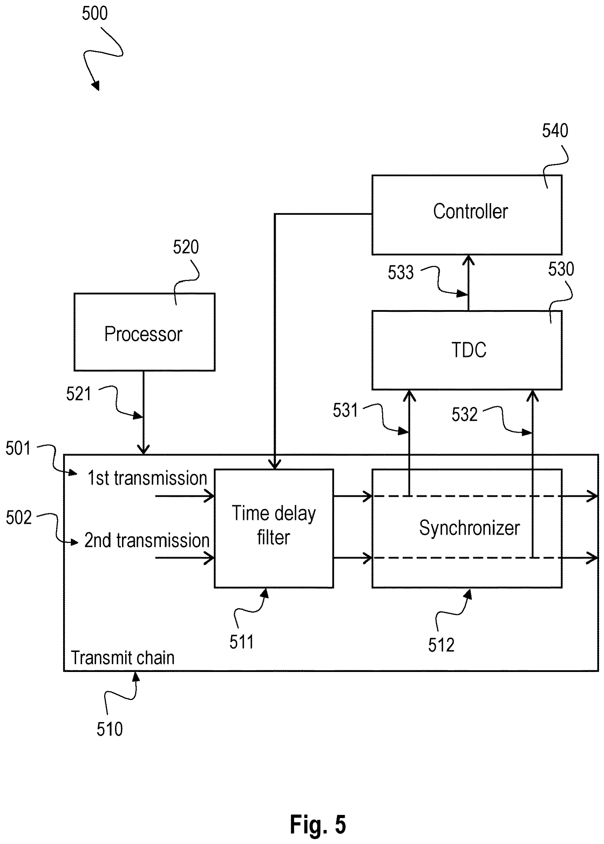

Fig. 5 is a block diagram of a transmitter device 500 according to the disclosure. The transmitter device 500 includes a transmit chain 510 configured to transmit a plurality of transmissions; a processor 520 configured to activate the transmit chain 510 for a first transmission 501, turn off the transmit chain 510 after the first transmission 501 and re-activate the transmit chain 510 for a second transmission 502. The transmitter device 500 further includes a synchronizer 512 configured to synchronize the transmit chain 510 upon activation; and a time delay filter 511 coupled to the synchronizer 512. The time delay filter 511 is configured to compensate for a time delay difference of the synchronizer 512 upon activation of the transmit chain 510 for the first transmission 501 and activation of the transmit chain 510 for the second transmission 502. The time delay filter 511 can delay the transmit signal by an integer or fractional value of the sampling time in order to provide synchronization between the two transmissions 501, 502.

The transmitter device 500 may further include a time-to-digital converter, TDC 530 configured to determine a time delay of the synchronizer 512. The transmitter device 500 may further include a controller 540 configured to determine a first time delay of the synchronizer 512 upon activation of the transmit chain 510 for the first transmission 501 and a second time delay of the synchronizer 512 upon activation of the transmit chain 510 for the second transmission 502.

The transmitter device 500 is a general representation of the transmitter device 400 described above with respect to Fig. 4 in which the time delay filter 511 may correspond to the fractional delay filter 311, the synchronizer 512 may correspond to the synchronizer 312, the TDC 530 may correspond to the TDC 330 and the controller 540 may correspond to the controller 340. In one implementation controller 540 and processor 520 may be implemented as one functional unit, e.g. as one hardware block. For the transmitter device 500, the first transmission 501 and the second transmission 502 are not necessarily a sounding packet 111 and a beamforming data packet 112. Both transmissions 501, 502 can specify any two transmissions between which synchronization is lost.

The controller 540 may be configured to determine a difference of the first time delay and the second time delay; and to adjust the time delay filter 511 based on that difference. The time delay filter 511 may include a fractional delay filter, e.g. a fractional delay filter 311 as described above with respect to Fig. 4. The time delay filter 511 may include an integer delay filter for adjustment of integer delay.

The processor 520 may be configured to activate the transmit chain 510 for transmission of the first transmission 501 and to turn off the transmit chain 510 after transmission of the first transmission 501. The processor 520 may be configured to reactivate the transmit chain 510 for transmission of the second transmission 502. The transmitter device 500 may include a first clock domain providing a write clock to the synchronizer and a second clock domain providing a read clock to the synchronizer. The processor 520 may turn the read clock off after a first transmission and turn the read clock on before a second transmission in order to save power. This results in a random delay relative to the write clock. The read clock may be DAC driven and the write clock may be from the modem domain and hence deterministic. The controller 540 may determine this random delay between read clock and write clock and provide compensation for this.

The transmitter device 500 may include a rate converter, e.g. a rate converter 313 as described above with respect to Fig. 4, configured to convert between the first clock domain and the second clock domain. The time delay filter 511 may be included in the rate converter.

The transmit chain 510 may include a beamforming transmit chain for enabling beamformed transmission. The first transmission 501 may include a sounding packet, e.g. a sounding packet 111 as described above with respect to Fig. 2. The second transmission 502 may include a beamformed data packet, e.g. a beamformed data packet 112 as described above with respect to Fig. 2, which is based on a feedback 222 to the sounding packet 111.

The processor 520 may be configured to turn off the transmit chain 510 after transmission of the sounding packet 111 until transmission of the beamformed data packet 112. In one implementation, the transmit chain 510 may include a WiFi transmit chain.

In one example, the transmitter device 500 may be a beamforming transmitter device 500, including: a transmit chain 510 configured to transmit a plurality of data packets; a processor 520 configured to activate the transmit chain 510 for transmitting a sounding packet 111, turn off the transmit chain 510 after transmission of the sounding packet 111 for reception of a feedback 222 to the sounding packet 111 and re-activate the transmit chain 510 for transmitting a beamformed data packet 112 based on the feedback 222. The beamforming transmitter device 500 further includes a synchronizer 512 configured to synchronize the transmit chain 510 when activated; and a time delay filter 511 coupled to the synchronizer 512, wherein the time delay filter 511 is configured to compensate for a time delay difference of the synchronizer 512 upon activation of the transmit chain 510 for transmitting the sounding packet 111 and activation of the transmit chain 510 for transmitting the beamformed data packet 112.

The beamforming transmitter device 500 may further include a time-to-digital converter 530 configured to determine a time delay of the synchronizer 512. The beamforming transmitter device 500 may further include a controller 540 configured to determine a first time delay of the synchronizer 512 upon activation of the transmit chain 510 for transmission of the sounding packet 111 and a second time delay of the synchronizer 512 upon activation of the transmit chain 510 for transmission of the beamformed data packet 112.

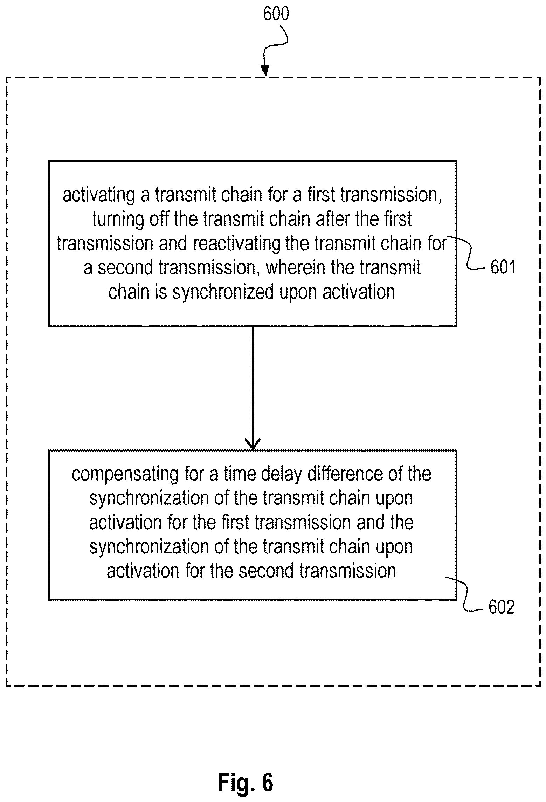

Fig. 6 is a schematic diagram illustrating a method 600 for time delay synchronization according to the disclosure.

The method 600 includes activating 601 a transmit chain for a first transmission, turning off the transmit chain after the first transmission and re-activating the transmit chain for a second transmission, wherein the transmit chain is synchronized upon activation. The transmit chain may be a transmit chain 510 as described above with respect to Fig. 5 or a transmit chain 400 as described above with respect to Fig. 4. The synchronization may be performed by a synchronizer 512 as described above with respect to Fig. 5 or by a synchronizer 312 as described above with respect to Fig. 4. The method 600 further includes compensating 602 for a time delay difference of the synchronization of the transmit chain upon activation for the first transmission and the synchronization of the transmit chain upon activation for the second transmission. The compensating 602 may be performed by a time delay filter 511 as described above with respect to Fig. 5 or by a fractional delay filter 311 as described above with respect to Fig. 4.

The method 600 may further include: determining a time delay of the synchronization. The method 600 may further include: determining a first time delay of the synchronization upon activation of the transmit chain for the first transmission and a second time delay of the synchronization upon activation of the transmit chain for the second transmission.

The method 600 may further include: determining a difference of the first time delay and the second time delay; and compensating for the time delay difference based on the difference. The method 600 may further include: compensating for the time delay difference based on fractional delay filtering, e.g. by a fractional delay filter 311 as described above with respect to Fig. 4. Alternatively, the method 600 may include compensating for the time delay difference based on integer delay filtering.

The method 600 may further include: activating the transmit chain for transmission of a first transmission and turning off the transmit chain after transmission of the first transmission

The transmit chain may include a beamforming transmit chain. The first transmission may include a sounding packet, e.g. a sounding packet 111 as described above with respect to Fig. 2. The second transmission may include a beamformed data packet which is based on a feedback to the sounding packet, e.g. as described above with respect to Fig. 2. The method 600 may further include turning off the transmit chain after transmission of the sounding packet until reception of the feedback. The transmit chain may include a WiFi transmit chain.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 600 described above with respect to Fig. 6 and the techniques described above with respect to Figs. 2 to 5. Such a computer program product may include a readable storage medium storing program code thereon for use by a processor, the program code comprising instructions for performing the method 600 and the techniques as described above.

### EXAMPLES

The following examples pertain to further embodiments. Example 1 is a transmitter device, comprising: a transmit chain configured to transmit a plurality of transmissions; a synchronizer configured to synchronize the transmit chain; and a time delay filter coupled to the synchronizer, wherein the time delay filter is configured to compensate for a time delay difference of the synchronizer.

In Example 2, the subject matter of Example 1 can optionally include a time-to-digital converter configured to determine a time delay of the synchronizer.

In Example 3, the subject matter of Example 2 can optionally include a controller configured to determine a first time delay of the synchronizer for a first transmission and a second time delay of the synchronizer for a second transmission.

In Example 4, the subject matter of Example 3 can optionally include that the controller is configured to determine a difference of the first time delay and the second time delay; and to adjust the time delay filter based on the difference.

In Example 5, the subject matter of any one of Examples 1-4 can optionally include that the time delay filter comprises a fractional delay filter.

In Example 6, the subject matter of any one of Examples 1-5 can optionally include that the time delay filter comprises an integer delay filter for adjustment of integer delay.

In Example 7, the subject matter of any one of Examples 1-6 can optionally include a first clock domain configured to provide a write clock to the synchronizer; and a second clock domain configured to provide a read clock to the synchronizer.

In Example 8, the subject matter of Example 7 can optionally include a rate converter configured to convert between the first clock domain and the second clock domain.

In Example 9, the subject matter of Example 8 can optionally include that the time delay filter is comprised in the rate converter and configured to determine a delay between the read clock and the write clock.

In Example 10, the subject matter of any one of Examples 1-9 can optionally include that the transmit chain comprises a beamforming transmit chain.

In Example 11, the subject matter of Example 10 can optionally include that the first transmission comprises a sounding packet.

In Example 12, the subject matter of Example 11 can optionally include that the second transmission comprises a beamformed data packet which is based on a feedback to the sounding packet.

In Example 13, the subject matter of Example 7 can optionally include a processor configured to turn off the read clock after a first transmission and to turn on the read clock before a second transmission in order to save power.

In Example 14, the subject matter of any one of Examples 1-13 can optionally include that the transmit chain comprises a WiFi transmit chain.

Example 15 is a beamforming transmitter device, comprising: a transmit chain configured to transmit a plurality of data packets; a processor configured to activate the transmit chain for transmitting a sounding packet, turn off the transmit chain after transmission of the sounding packet for reception of a feedback to the sounding packet and re-activate the transmit chain for transmitting a beamformed data packet based on the feedback; a synchronizer configured to synchronize the transmit chain when activated; and a time delay filter coupled to the synchronizer, wherein the time delay filter is configured to compensate for a time delay difference of the synchronizer upon activation of the transmit chain for transmitting the sounding packet and activation of the transmit chain for transmitting the beamformed data packet.

In Example 16, the subject matter of Example 15 can optionally include a time-to-digital converter configured to determine a time delay of the synchronizer.

In Example 17, the subject matter of Example 16 can optionally include a controller configured to determine a first time delay of the synchronizer upon activation of the transmit chain for transmission of the sounding packet and a second time delay of the synchronizer upon activation of the transmit chain for transmission of the beamformed data packet.

In Example 18, the subject matter of Example 17 can optionally include that the controller is configured to determine a difference of the first time delay and the second time delay; and to adjust the time delay filter based on the difference.

In Example 19, the subject matter of any one of Examples 15-18 can optionally include that the time delay filter comprises a fractional delay filter.

In Example 20, the subject matter of any one of Examples 15-19 can optionally include that the time delay filter comprises an integer delay filter for adjustment of integer delay.

In Example 21, the subject matter of any one of Examples 15-20 can optionally include that the processor is configured to activate the transmit chain based on switching the transmit chain to a first clock domain and to turn off the transmit chain based on switching the transmit chain to a second clock domain.

In Example 22, the subject matter of Example 21 can optionally include a rate converter configured to convert between the first clock domain and the second clock domain.

In Example 23, the subject matter of Example 22 can optionally include that the time delay filter is comprised in the rate converter.

In Example 24, the subject matter of any one of Examples 15-23 can optionally include that the transmit chain comprises a WiFi transmit chain.

Example 25 is a method for time delay synchronization, the method comprising: activating a transmit chain for a first transmission, turning off the transmit chain after the first transmission and re-activating the transmit chain for a second transmission, wherein the transmit chain is synchronized upon activation; and compensating for a time delay difference of the synchronization of the transmit chain upon activation for the first transmission and the synchronization of the transmit chain upon activation for the second transmission.

In Example 26, the subject matter of Example 25 can optionally include determining a time delay of the synchronization.

In Example 27, the subject matter of Example 26 can optionally include: determining a first time delay of the synchronization upon activation of the transmit chain for the first transmission and a second time delay of the synchronization upon activation of the transmit chain for the second transmission.

In Example 28, the subject matter of Example 27 can optionally include: determining a difference of the first time delay and the second time delay; and compensating for the time delay difference based on the difference.

In Example 29, the subject matter of any one of Examples 25-28 can optionally include: compensating for the time delay difference based on fractional delay filtering.

In Example 30, the subject matter of any one of Examples 25-29 can optionally include: compensating for the time delay difference based on integer delay filtering.

In Example 31, the subject matter of any one of Examples 25-30 can optionally include: activating the transmit chain based on switching the transmit chain to a first clock domain and turning off the transmit chain based on switching the transmit chain to a second clock domain.

In Example 32, the subject matter of Example 31 can optionally include: converting between the first clock domain and the second clock domain based on a rate converter.

In Example 33, the subject matter of any one of Examples 25-32 can optionally include that the transmit chain comprises a beamforming transmit chain.

In Example 34, the subject matter of Example 33 can optionally include that the first transmission comprises a sounding packet.

In Example 35, the subject matter of Example 34 can optionally include that the second transmission comprises a beamformed data packet which is based on a feedback to the sounding packet.

In Example 36, the subject matter of Example 35 can optionally include: turning off the transmit chain after transmission of the sounding packet until reception of the feedback.

In Example 37, the subject matter of any one of Examples 25-36 can optionally include that the transmit chain comprises a WiFi transmit chain.

Example 38 is a device for time delay synchronization, the device comprising: means for activating a transmit chain for a first transmission, turning off the transmit chain after the first transmission and re-activating the transmit chain for a second transmission, wherein the transmit chain is synchronized upon activation; and means for compensating for a time delay difference of the synchronization of the transmit chain upon activation for the first transmission and the synchronization of the transmit chain upon activation for the second transmission.

In Example 39, the subject matter of Example 38 can optionally include means for determining a time delay of the synchronization.

Example 40 is a beamforming system, comprising a transmit device and a receive device, wherein the transmit device comprises: a transmit chain configured to transmit a plurality of data packets; a processor configured to activate the transmit chain for transmitting a sounding packet, turn off the transmit chain after transmission of the sounding packet for reception of a feedback to the sounding packet and re-activate the transmit chain for transmitting a beamformed data packet based on the feedback; a synchronizer configured to synchronize the transmit chain when activated; and a time delay filter coupled to the synchronizer, wherein the time delay filter is configured to compensate for a time delay difference of the synchronizer upon activation of the transmit chain for transmitting the sounding packet and activation of the transmit chain for transmitting the beamformed data packet, wherein the receive device comprises: a receiver configured to receive the sounding packet; and a transmit chain configured to transmit the feedback to the sounding packet.

In Example 41 the subject matter of Example 40 can optionally include that the transmit device comprises a time-to-digital converter configured to determine a time delay of the synchronizer.

Example 42 is a beamforming transmitter circuit, comprising: a transmit chain configured to transmit a plurality of data packets; a processor configured to activate the transmit chain for transmitting a sounding packet, turn off the transmit chain after transmission of the sounding packet for reception of a feedback to the sounding packet and re-activate the transmit chain for transmitting a beamformed data packet based on the feedback; a synchronizer circuit configured to synchronize the transmit chain when activated; and a time delay filter circuit coupled to the synchronizer circuit, wherein the time delay filter circuit is configured to compensate for a time delay difference of the synchronizer circuit upon activation of the transmit chain for transmitting the sounding packet and activation of the transmit chain for transmitting the beamformed data packet.

In Example 43, the subject matter of Example 42 can optionally include: a time-to-digital converter circuit configured to determine a time delay of the synchronizer circuit.

In Example 44, the subject matter of Example 43 can optionally include: a controller configured to determine a first time delay of the synchronizer circuit upon activation of the transmit chain for transmission of the sounding packet and a second time delay of the synchronizer circuit upon activation of the transmit chain for transmission of the beamformed data packet.

Example 45 is a computer readable non-transitory medium on which computer instructions are stored which when executed by a computer cause the computer to perform the method of any one of Examples 25 to 37.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A transmitter device, comprising:
a transmit chain configured to transmit a plurality of transmissions;
a synchronizer configured to synchronize the transmit chain; and
a time delay filter coupled to the synchronizer, wherein the time delay filter is configured to compensate for a time delay difference of the synchronizer.

2. The transmitter device of claim 1, comprising:
a time-to-digital converter configured to determine a time delay of the synchronizer.

3. The transmitter device of claim 2, comprising:
a controller configured to determine a first time delay of the synchronizer for a first transmission and a second time delay of the synchronizer for a second transmission.

4. The transmitter device of claim 3,
wherein the controller is configured to determine a difference of the first time delay and the second time delay; and to adjust the time delay filter based on the difference.

5. The transmitter device of one of the preceding claims,
wherein the time delay filter comprises a fractional delay filter.

6. The transmitter device of one of the preceding claims,
wherein the time delay filter comprises an integer delay filter for adjustment of integer delay.

7. The transmitter device of one of the preceding claims, comprising:
a first clock domain configured to provide a write clock to the synchronizer; and
a second clock domain configured to provide a read clock to the synchronizer.

8. The transmitter device of claim 7, comprising:
a rate converter configured to convert between the first clock domain and the second clock domain.

9. The transmitter device of claim 8,
wherein the time delay filter is comprised in the rate converter and configured to determine a delay between the read clock and the write clock.

10. The transmitter device of one of the preceding claims,
wherein the transmit chain comprises a beamforming transmit chain.

11. The transmitter device of claim 10,
wherein a first transmission of the plurality of transmissions comprises a sounding packet.

12. The transmitter device of claim 11,
wherein a second transmission of the plurality of transmissions comprises a beamformed data packet which is based on a feedback to the sounding packet.

13. A method for time delay synchronization, the method comprising:
activating a transmit chain for a first transmission, turning off the transmit chain after the first transmission and re-activating the transmit chain for a second transmission,
wherein the transmit chain is synchronized upon activation; and
compensating for a time delay difference of the synchronization of the transmit chain upon activation for the first transmission and the synchronization of the transmit chain upon activation for the second transmission.

14. The method of claim 13, comprising:
determining a time delay of the synchronization.

15. A computer readable non-transitory medium on which computer instructions are stored which when executed by a computer cause the computer to perform the method of claim 13 or 14.
